# EUROPEAN PATENT SPECIFICATION

(11) **EP 2 867 725 B1**
(45) Date of publication and mention of the grant of the patent: **27.04.2016**
(21) Application number: 13762248.6
(22) Date of filing: 28.06.2013
(51) Int. Cl.: G02F 1/155, E06B 3/67, H01G 9/20, H01M 4/86, H01M 14/00

(54) **PHOTOVOLTACHROMIC DEVICE WITH INTERDIGITATED ELECTRODES**
FOTOVOLTACHROME VORRICHTUNG MIT INEINANDERGREIFENDEN ELEKTRODEN
DISPOSITIF PHOTOVOLTACHROMIQUE À ÉLECTRODES INTERDIGITÉES

(30) Priority: 29.06.2012 IT TO20120581
(43) Date of publication of application: 06.05.2015
(73) Proprietor: Fondazione Istituto Italiano Di Tecnologia, 16163 Genova (IT)
(72) Inventor: MANCA, Michele, I-73100 Lecce (IT); CANNAVALE, Alessandro, I-70010 Casamassima (IT); GIGLI, Giuseppe, I-00167 Roma (IT); CINGOLANI, Roberto, I-16014 Ceranesi (IT)
(74) Representative: Spalla, Pietro
(86) International application number: PCT/IB2013/055337
(87) International publication number: WO 2014/002076

(56) References cited:
- EP-A1- 2 458 605
- EP-A2- 2 241 934
- US-A1- 2011 220 192
- ALESSANDRO CANNAVALE ET AL: "Highly efficient smart photovoltachromic devices with tailored electrolyte composition", ENERGY & ENVIRONMENTAL SCIENCE, vol. 4, no. 7, 1 January 2011 (2011-01-01) , page 2567, XP055056845, ISSN: 1754-5692, DOI: 10.1039/c1ee01231b cited in the application
- BAR G ET AL: "A new approach for design of organic electrochromic devices with inter-digitated electrode structure", SOLAR ENERGY MATERIALS AND SOLAR CELLS, ELSEVIER SCIENCE PUBLISHERS, AMSTERDAM, NL, vol. 93, no. 12, 1 December 2009 (2009-12-01), pages 2118-2124, XP026688161, ISSN: 0927-0248, DOI: 10.1016/J.SOLMAT.2009.08.013 [retrieved on 2009-09-16]

## Description

### TECHNICAL FIELD

The present invention relates to an improved photovoltachromic device.

### BACKGROUND ART

As is known, a photovoltachromic device performs a first and a second function. In particular, a first function consists in converting electromagnetic radiation into electrical energy (photovoltaic function); the second function consists in varying the chromatic characteristics of the device itself following specific external stimuli (photoelectrochromic function).

In detail, a photoelectrochemical device is based on the use of a component capable of absorbing electromagnetic radiation, known as a photosensitizer or dye, and an electrochemical cell, inside which reduction-oxidation reactions take place in response to the above-stated external stimuli. More briefly, the photosensitizer is also known as a sensitizer.

Historically, there was a turning point in research on the electrochemical use of organic photosensitizers in the photovoltaic field in 1991, when the article by Brian O'Regan and Michael Graetzel entitled, "A low-cost, high-efficiency solar cell based on dye-sensitized colloidal TiO2 films", was published in Nature, 1991, 353, 737-740, where a solar cell of the so-called "dye-sensitized solar cell" (DSSC) type was proposed for the first time.

A DSSC cell is made from a mesoporous photoelectrode, rendered light-sensitive by using an organometallic dye, which acts as a photosensitizer. In particular, the mesoporous photoelectrode, made of a film of titanium dioxide with a thickness in the range 10µm - 20µm, has a surface area approximately six hundred times larger than the area of the projected surface on which it is deposited.

In use, radiation is transformed into electrical energy by a chemical reaction that involves, on the one hand, the molecules of the dye with which the titanium dioxide film was previously "impregnated" and, on the other, an electrolytic solution that is in contact with the photoelectrode and the platinum counterelectrode, which acts as a catalyst. DSSC cells are therefore classified as photoelectrochemical cells.

The first known example of a sensitizer-based photoelectrochromic device, which was proposed by C. Bechinger et al. in "Photoelectrochromic windows and displays", Nature, 1996, 383, pages 608-610, is also based on an architecture similar to that just described. This first photoelectrochromic device also employs a film of mesoporous titanium oxide, which has been made to adsorb an organic or organometallic dye. With regard to the counterelectrode, the platinum originally present in the DSSC cells with the function of catalyst is replaced by a layer of tungsten trioxide (WO₃) having electrochromic properties. In conditions of illumination, the electrons generated at the photoelectrode reach the electrochromic layer by passing through an external circuit. The electrolytic solution contains lithium ions, which penetrate the crystalline structure of the counterelectrode, reducing the tungsten and thereby causing the alteration of the chromatic state following a reduction-oxidation (redox) reaction, which results in the formation of ternary compounds of the LiₓW₁₋ₓO₃ type. The electrochromic function is therefore activated by photoelectric generation, without the need to electrically supply the device from the outside.

In open-circuit conditions, although a photovoltage is created in the photoelectrode, no electrochemical process takes place that triggers the colouring. In addition, in the absence of light and in closed-circuit conditions, the bleaching phenomenon takes place, as the cations previously intercalated inside the crystalline structure of the electrochromic oxide tend to return to the electrolytic solution, in response to the emptying of the conduction band of the mesoporous oxide forming the photoanode.

Numerous alternatives to traditional inorganic electrochromic materials are also known in the state of the art of photoelectrochromic devices; for example, the oxides of tungsten, nickel, vanadium, iridium and niobium can be counted amongst these alternatives. Furthermore, certain families of conductive polymers have exhibited fair electrochromic properties; by way of example, polypyrroles, polysulphonates and polythiophenes can be mentioned. An ample bibliography regarding the architectures and the performance of electrochromic devices made with innovative materials has been collected by R. Baetens et al. in "Properties, requirements and possibilities of smart windows for dynamic daylight and solar energy control in buildings: A state-of-the-art review", Solar Energy Materials & Solar Cells, 94, 2010, 87-105.

Whereas the article "Fast-switching photovoltachromic cells with tunable transmittance", by J. Wu, M. Hsieh, W. Liao, W. Wu and J. Chen, ACS Nano, 2009, 8, 2297-2303 describes a dual-function device, termed photovoltachromic as it is able to perform both the photoelectrochromic function and the photovoltaic function.

For practical purposes, the efficiency of photovoltaic conversion of this photovoltachromic device is approximately 0.5%. Furthermore, this photovoltachromic device does not allow activating the photovoltaic functions and the photoelectrochromic function in an independent manner.

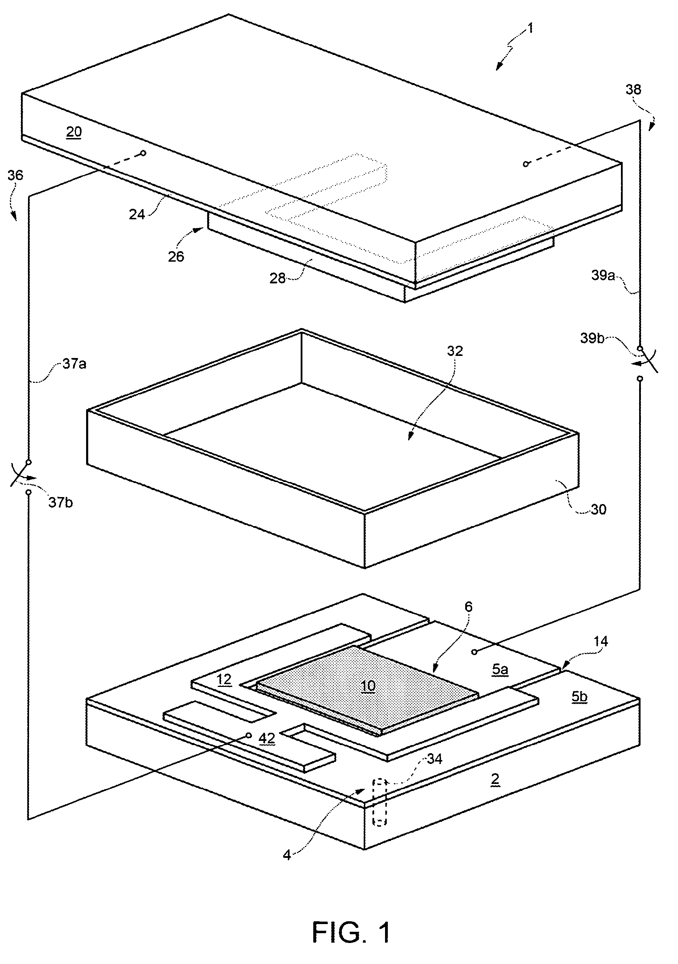

In order to overcome these described drawbacks, the article "Highly efficient smart photovoltachromic devices with tailored electrolyte composition", by Alessandro Cannavale et al., Energy and Environmental Science, 2011, volume 4, pages 2567-2574, proposes a photovoltachromic device of the type shown in Figure 1 and indicated by reference numeral 1.

In detail, the photovoltachromic device 1 comprises a first sheet of glass 2, known as a substrate, over which a first conductive layer 4 extends, the latter being made of a transparent conductive material, such as, for example, indium tin oxide (ITO), aluminium zinc oxide (AZO), fluorine tin oxide (FTO), or one of the oxides generically defined as transparent conductive oxides (TCO). The first conductive layer 4 is in direct contact with the first sheet of glass 2; in addition, the first conductive layer 4 is divided into a first and a second portion 5a and 5b, which are separated from each other by a trench 14 that acts as an electrical insulation region. The first and second portions 5a and 5b of the first conductive layer 4 are ohmically disconnected from each other.

The photovoltachromic device 1 further comprises a counterelectrode 6, which extends above the first conductive layer 4, with which it is in direct contact, and, in turn, includes a first and a second region 10 and 12.

The first region 10 is formed by a film of electrochromic material, made of an electrochromic oxide chosen from tungsten oxide, nickel oxide, vanadium oxide, iridium oxide, niobium oxide, or an electrochromic polymer, such as, for example, polypyrroles, polysulphonates, polythiophenes, etc. In the following, the first region 10 is referred to as the electrochromic region 10. The electrochromic region 10 is in direct contact with the first portion 5a of the first conductive layer 4, over which it is laid, but does not touch the second portion 5b.

The second region 12 is coplanar with the electrochromic region 10 and is made of a material that, as described hereinafter, performs a catalytic function and therefore the second region 12 is hereinafter referred to as the catalytic region 12; for example, the catalytic region 12 may be made of platinum. The catalytic region 12 is in direct contact with the second portion 5b of the first conductive layer 4, over which it is laid, but does not touch the first portion 5a.

In greater detail, when viewed from the top, the electrochromic region 10 has a square or rectangular shape; in addition, when viewed from the top, the catalytic region 12 has a C-shape and is arranged so that the cavity defined by the "C" houses the electrochromic region 10. Thanks to the presence of the trench 14, the electrochromic region 10 and the catalytic region 12 are physically separated from each other.

The photovoltachromic device 1 further comprises a second sheet of glass 20, placed over and set apart from the counterelectrode 6. A second conductive layer 24, which is made of a transparent conductive material, such as, for example, opportunely doped indium or tin oxide, and extends beneath and in direct contact with the second sheet of glass 20.

A photoelectrode 26 extends beneath and in direct contact with the second conductive layer 24, this photoelectrode being formed of a host layer 28 made of a conducting oxide, such as, for example, opportunely doped titanium dioxide (TiO₂) or zinc oxide (ZnO), the surface of which is made to adsorb molecules of an organic or organometallic compound, which acts as a sensitizer (not shown in Figure 1).

The host layer 28, and therefore also the photoelectrode 26, has a C-shape when viewed from the top. Even more particularly, when viewed from the top, the host layer 28 has a shape and placement such that it is exactly superimposed on the catalytic region 12. Therefore, the photoelectrode 26 is vertically aligned with the catalytic region 12, but is laterally offset with respect to the electrochromic region 10; in greater detail, the photoelectrode 26 and the electrochromic region 10 do not even partially overlap.

The photovoltachromic device 1 further comprises a sealing element 30, interposed between the first and the second conductive layers 4 and 24, and with which it is in direct contact. The sealing element 30 has a closed shape when viewed from the top and performs the function of rendering the first and the second conductive layers 4 and 24 mutually integral, by gluing, as well as defining a chamber 32, which extends in the gap between the first and second conductive layers 4 and 24 and is also known as a cell. Inside the chamber 32, there is an electronic mediator (not shown in Figure 1), which is in direct contact with the photoelectrode 26, the electrochromic region 10 and the catalytic region 12.

The electronic mediator, also known as the electrolyte, may be formed, for example, by an electrolytic solution comprising a redox couple, typically iodine-iodide, dissolved in an organic solvent. In particular, the iodide may be present thanks to the use of alkaline metal salts, such as, for example, LiI, NaI, KI, etc., in the electrolytic solution.

The electronic mediator can be introduced into the chamber 32 through a hole 34 made in the first sheet of glass 2 and in the first conductive layer 4.

The photovoltachromic device 1 further comprises a first and a second conductive connection 36 and 38.

The first conductive connection 36 is between the second conductive layer 24 and the catalytic region 12. More particularly, the first conductive connection 36 comprises a first conductive path 37a, on which there is a first switch 37b. In addition to being connected to the second conductive layer 24, the first conductive path 37a is also connected to a T-shaped connection region 42, which is made of a catalytic material and is coplanar with the catalytic region 12, with which it is in direct contact. The first conductive path 37a is therefore connected to the second portion 5b of the first conductive layer 4, through the connection region 42.

The second conductive connection 38 is connected between the second conductive layer 24 and the first portion 5a of the first conductive layer 4. In particular, the second conductive connection 38 comprises a second conductive path 39a, on which there is a second switch 39b. The second conductive path 39a is connected to the second conductive layer 24 and to the first portion 5a of the first conductive layer 4, and is therefore connected to the electrochromic region 10.

Thanks to the presence of the first and second switches 37b and 39b, the first and second conductive connections 36 and 38 can be opened and closed in a controllable manner. In addition, although not shown in Figure 1, the first and second conductive connections 36 and 38 comprise resistors and charge accumulation systems made according to the criteria and methods of the known art.

In the case where the second switch 39b is closed, for the above-described reasons, a potential difference is established between the photoelectrode 26 and the electrochromic region 10. Therefore, in the presence of irradiation, a flow of electrons is generated from the photoelectrode 26 to the electrochromic region 10. Once they reach the electrochromic region 10, the electrons occupy the free energy levels of the electrochromic material, favouring the intercalation of the cations present in the electrolytic solution. In the case where the electrolytic solution is based on lithium iodide, the cations present in the electrolytic solution are lithium ions Li⁺ .

More particularly, the electrochromic region 10 is made of an electrochromic material of the so-called cathodic colouring type, which modifies its transmittance following the reception of cations. In fact, the intercalation of cations entails a modulation of the transmittance of the electrochromic material, caused by a translation of the absorption spectrum peak of the electrochromic material. This phenomenon depends on the intensity of the irradiation and continues until the sites in the electrochromic material available for cation intercalation are completely saturated. A change in the transparency of the electrochromic region 10 thus occurs.

The photovoltachromic device 1 integrates a photoelectrochromic device and a photovoltaic cell (in particular, a DSSC cell), which share the photoelectrode 26 and the electronic mediator. In particular, the electronic mediator acts as a redox mediator for ionic exchange between the photoelectrode 26 and the electrochromic region 10 and the catalytic region 12. Furthermore, by opportunely controlling the first and second switches 37b and 39b, it is possible to individually enable/disable the photovoltaic function and the transmittance modulation function.

In greater detail, the arrangement of the electrochromic region 10 and the catalytic region 12 is such that the catalytic material forming the catalytic region 12 accelerates the kinetics of the variation in transmittance of the electrochromic material that forms the electrochromic region 10. In fact, as the catalytic material catalyses the reduction of iodine, it simultaneously favours the availability of Li⁺ ions.

For practical purposes, since, as stated, the photoelectrode 26 does not extend over the electrochromic region 10, the transparency of the photovoltachromic device 1, and therefore also the colouring, substantially depend on just the electrochromic region 10, which typically occupies a much larger area with respect to the catalytic region 12; in addition, the latter is arranged in a peripheral position with respect to the electrochromic region 10. In this way, even though the catalytic region 12 is substantially opaque, it does not annul the overall optical performance of the photovoltachromic device 1. In other words, variations in transmittance of the electrochromic region 10 significantly affect the overall transmittance of the photovoltachromic device 1.

The paper "A new approach for design of organic electrochromic devices with inter-digitated electrode structure", of Bar G. et al., Solar Energy Materials and Solar Cells, Elsevier Science Publishers, Amsterdam, NL, vol.93, no.12, 1 December 2009, pp. 2118-2124 discloses two electrodes on a surface; these two electrodes are inter-digitated. One electrode acts as a reference electrode, whereas the other one is covered with titania nanoparticles.

### DISCLOSURE OF INVENTION

The object of the present invention is to provide a photovoltachromic device that further improves the photovoltachromic device according to the known art.

According to the invention, a photovoltachromic device is provided as defined in the appended claims.

### BRIEF DESCRIPTION OF THE DRAWINGS

For a better understanding of the invention, some embodiments will now be described, purely by way of a non-limitative example and with reference to the attached drawings, where:
- Figure 1 shows an exploded view of a photovoltachromic device of known type;
- Figure 2 shows a cross-section of an example of a photovoltachromic device;
- Figure 3 shows a section of the photovoltachromic device shown in Figure 2, along section line III-III indicated in Figure 2;
- Figure 4 shows an exploded view of portions of the photovoltachromic device shown in Figures 2 and 3;
- Figures 5 and 6 show cross-sections of embodiments of the present photovoltachromic device;
- Figure 7 shows an exploded view of portions of the photovoltachromic device shown in Figure 6; and
- Figures 8-13 schematically show perspective views of a photovoltachromic device, during successive steps of a manufacturing process.

### BEST MODE FOR CARRYING OUT THE INVENTION

The applicant has observed that, although the photovoltachromic device 1 efficaciously enables integrating a photovoltaic cell and a photoelectrochromic device, it has the drawback of not being able to guarantee uniform colouring. In fact, in the photovoltachromic device 1, the electrochromic region 10 is characterized by non-uniform colouring/bleaching kinetics, the colouring/bleaching speed being a function of the distance from the catalytic region 12. In other words, portions of the electrochromic region 10 arranged in proximity to the catalytic region 12 exhibit more rapid changes in transmittance with respect to portions of the electrochromic region 10 placed at greater distances from the catalytic region 12.

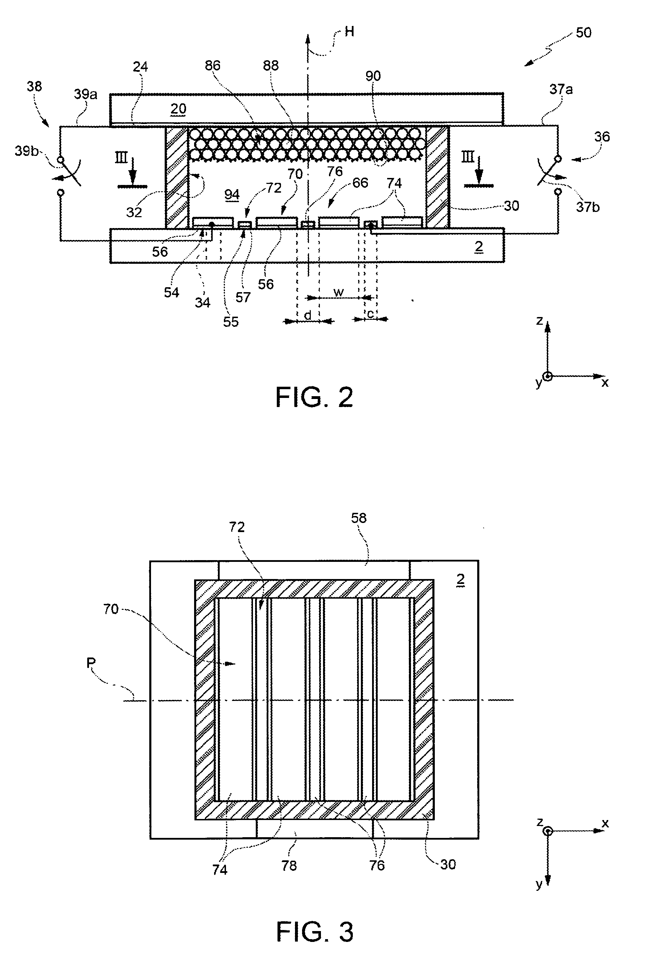

Given this premise, Figures 2 and 3 show an improved type of photovoltachromic device 50, which is described below. Components already present in the photovoltachromic device shown in Figure 1 are indicated with the same reference numerals, except where specified otherwise; furthermore, the following description is limited to the differences between the photovoltachromic device 50 and the photovoltachromic device shown in Figure 1.

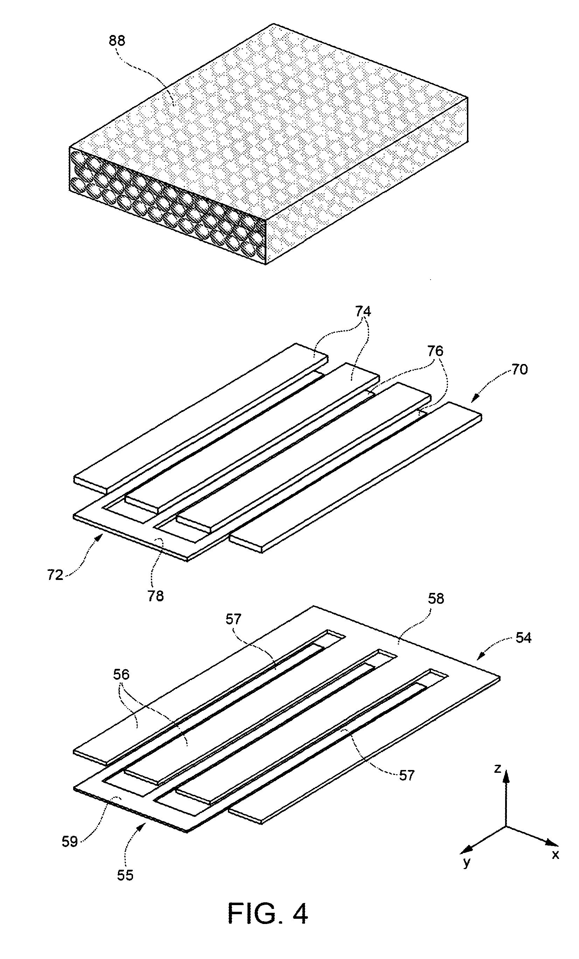

In detail, the first conductive layer, indicated here by reference numeral 54, defines a plurality of first support strips 56, made of a transparent conductive material (for example, indium tin oxide or fluorine tin oxide), mutually parallel and joined by a first connecting region 58 (Figures 3 and 4), with which they are in direct contact; in particular, in the example shown in Figures 2-4, there are four first support strips 56.

In detail, when viewed from the top, the first support strips 56 have rectangular shapes, with a width w, measured in a first direction x. Furthermore, pairs of adjacent first support strips 56 are separated from each other by a distance d, again measured in the first direction x.

An adhesion promoter layer 55, made of titanium for example, is also present on top of the first sheet of glass 2. In particular, the adhesion promoter layer 55 comprises a plurality of second support strips 57, which are parallel to each other, parallel to the first support strips 56 and joined by a second connecting region 59 (Figure 4), with which they are in direct contact. More particularly, each second support strip 57 rests in direct contact with the first sheet of glass 2, and is thus housed within the gaps defined by the first support strips 56. Even more particularly, when viewed from the top, each second support strip 57 has a rectangular shape, with a width c, measured in the first direction x, where c<d. In this way, each second support strip 57 is interposed between two corresponding mutually consecutive first support strips 56, with respect to which it is laterally offset, so as not to be in direct contact with them.

In greater detail, the first conductive layer 54 and the adhesion promoter layer 55 are physically separate, because neither the first support strips 56 make contact with the second connecting region 59, nor do the second support strips 57 make contact with the first connecting region 58.

The counterelectrode, indicated here by reference numeral 66, is still formed by the catalytic region and the electrochromic region, respectively indicated here by reference numerals 70 and 72. The electrochromic region 70 and the catalytic region 72 are still physically separate. Furthermore, the electrochromic region 70 is made of a cathodic-colouring electrochromic material, such as tungsten oxide for example. The catalytic region 72 is made of layer of catalytic material, such as platinum for example.

In particular, the electrochromic region 70 is in turn formed by a number of electrochromic strips 74 equal to the number of first support strips 56. Each electrochromic strip 74 overlies a respective first support strip 56, with which it is in direct contact. More particularly, when viewed from the top, each electrochromic strip 74 has the same rectangular shape as the corresponding first support strip 56. Furthermore, each electrochromic strip 74 is exactly superimposed on the corresponding first support strip 56.

The catalytic region 72 is made of a plurality of catalytic strips 76. Each catalytic strip 76 overlies a corresponding second support strip 57, with which it is in direct contact. More particularly, when viewed from the top, each catalytic strip 76 has the same rectangular shape as the corresponding second support strip 57; this rectangular shape therefore has a width equal to c, measured in the first direction x. Furthermore, each catalytic strip 76 is exactly superimposed on the corresponding second support strip 57.

For example, the width c of each catalytic strip 76 may be in the range between 10nm and 500um, and preferably between 1um and 100um.

The width w of each electrochromic strip 74 may be in the range between 100nm and 1cm, and preferably between 10um and 500um.

Preferably, the ratio c/w is between 0.1 and 1, depending on the expected use of the photovoltachromic device 50.

In practice, the catalytic strips 76 are parallel to each other and parallel to the electrochromic strips 74. In particular, each catalytic strip 76 is housed within the gaps defined by the electrochromic strips 74. In this way, each catalytic strip 76 is interposed between two corresponding consecutive electrochromic strips 74, with respect to which it is laterally offset, so as not to be in direct contact with them.

The catalytic region 72 further comprises a third connecting region 78, which is in direct contact with all of the catalytic strips 76, overlies the second connecting region 59 and has, when viewed from the top, the same shape as the second connecting region 59; more particularly, the third connecting region 78 is exactly superimposed on the second connecting region 59. For example, when viewed from the top, the second and third connecting regions 59 and 78, as also the first connecting region 58, may have a rectangular shape.

More particularly, assuming an orthogonal reference system formed by a second and a third direction y and z in addition to the first direction x, and such that the second direction y defines, together with the first direction x, a plane xy parallel to the first sheet of glass 2, the electrochromic strips 74 and the catalytic strips 76 are aligned parallel in the second direction y. In addition, as shown in Figures 3 and ₄, assuming that the sealing element 30 has, when viewed from the top, the shape of a square surface containing a square cavity, centred with the square surface containing it, and assuming a first axis P, parallel to the first direction x and passing through the geometric centre of this square cavity, it is found that, when viewed from the top, the first and the third connecting region 58, 78 are arranged on opposite sides with respect to the first axis P.

In practice, the electrochromic region 70 and the catalytic region 72 are interdigitated, and therefore the number of electrochromic strips 74 is at least two and the number of catalytic strips 76 is at least two. In other words, the electrochromic strips 74 and the catalytic strips 76 are intercalated and so they alternate with each other. In addition, when viewed from the top, the electrochromic strips 74 and the catalytic strips 76 are enclosed by the sealing element 30, which is formed so as to allow the first, second and the third connecting regions 58, 59 and 78 to protrude, when viewed from the top, at least partially outside it. The first and third connecting regions 58 and 78 are in electrical contact with the second and first conductive connections 36 and 38, respectively, and in particular with the second and first conductive paths 39a and 37a, respectively. In still greater detail, by defining a second axis H, parallel to the third direction z and passing through the geometric centre of the above-mentioned square cavity, and therefore coincident with the longitudinal axis of the sealing element 30, it is found that this second axis H passes through the geometric centre of a first structure defined by the set of electrochromic strips 74, as well as through the geometric centre of a second structure defined by the set of catalytic strips 76. In other words, the second axis H is an axis of symmetry for the set of electrochromic strips 74 and for the set of catalytic strips 76. Without any loss of generality, it is also assumed that the second axis H is oriented such that the second sheet of glass 20 is arranged above, i.e. downstream of, the first sheet of glass 2. For the sole purpose of aiding comprehension, and therefore again without any loss of generality, the use of terms such as "above" or "below" in the present description to describe the reciprocal arrangement of two or more elements should be intended with reference to the second axis H, except where specified otherwise.

With regard to the photoelectrode, indicated here by reference numeral 86, it is formed by the host layer, indicated here by reference numeral 88 that, in turn, is preferably made of a conductive oxide transparent in the region of the visible spectrum, such as, for example, an oxide chosen from titanium dioxide (TiO₂), zinc oxide (ZnO), tin dioxide (SnO₂) and niobium pentoxide (Nb₂O₅), the chosen oxide being doped in a manner which is in itself known. More in general, the host layer 86 may be made of any combination of the above-stated (doped) oxides, or any combination of one of the above-stated oxides and a semiconductor material.

The host layer 88 is produced in a manner so as to have a mesoporous structure capable of offering a large surface area (with an approximate seven-hundredfold increase with respect to the projected surface area). This surface is sensitized to the absorption of solar radiation by means of opportune chemical functionalization with a first sensitizer 90 of molecular type. The first sensitizer 90 is formed by organic or organometallic molecules, in themselves known and chosen according to the desired spectral absorption properties of the photovoltachromic device 50.

For example, when viewed from the top, the host layer 88 may have a square shape, so that each of its four sides makes contact with a corresponding side of the sealing element 30. In this way, the geometric centre of the square defined in the top view of the host layer 88 lies on the second axis H.

With regard to the electronic mediator, indicated here by reference numeral 94, it is formed by an electrolytic solution containing a redox couple capable of regenerating the first sensitizer 90, oxidised following the mechanism of solar radiation absorption and conversion; in addition, the electronic mediator 94 contains alkaline cations capable of feeding the colouring mechanism of the electrochromic region 72.

The redox couple is formed, for example, by I⁻/I₃⁻ ions, the presence of which in the electrolytic solution is determined by the dissociation of molecular iodine I₂ and one or more iodinated molecular compounds, the latter also being dissolved in the solution. In particular, the electrolytic solution contains at least one iodinated molecular compound chosen from: alkaline or alkaline-earth metal iodides (for example: LiI, NaI, KI, CsI and CaI₂) and organic iodides, such as the compounds known as iodinated ionic liquids for example. Furthermore, compounds based on alternative redox couples with respect to the I⁻/I₃⁻ redox couple may be used; for example, redox couples can be used that are based on bromides or sulphides, or in alternative, based on organic compounds containing sulphur, ferrocene or cobalt. In any case, the reducing species may be made of an alkaline or alkaline-earth metal. In more general terms, the redox couple may therefore be formed by:
- a halogen, or a compound alternatively based on sulphur, ferrocene or cobalt; and
- a binary compound containing an alkaline or alkaline-earth metal.

In the example shown in Figure 2, the host layer 88, and therefore the photoelectrode 86, is placed above the electrochromic strips 74, as well as above the catalytic strips 76. Even more particularly, the host layer 88 is vertically aligned with the catalytic region 72 and with the electrochromic region 70 (not considering the third connecting region 78).

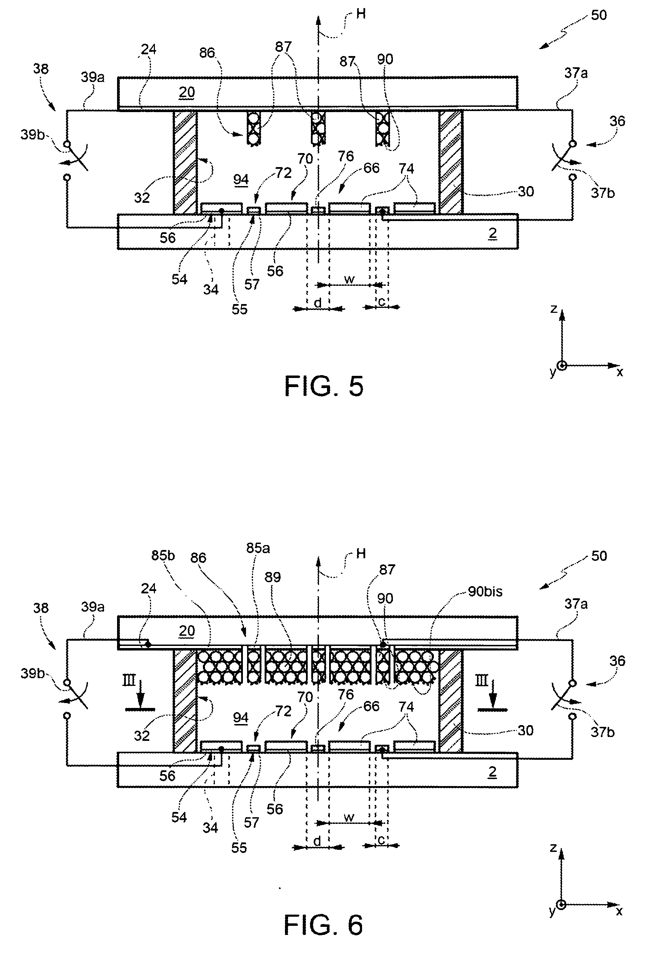

According to the embodiment shown in Figure 5, instead of being formed by the host layer 88, the photoelectrode 86 is formed by a plurality of first portion strips 87, which are made of the same material of which the host layer 88 is made, are parallel to each other and are formed beneath the second conductive layer 24, with which they are in direct contact. Furthermore, the first portion strips 87 have the same width c as the catalytic strips 76; more particularly, each first portion strip 87 is vertically aligned with a corresponding catalytic strip 76. In this way, an increase in the transparency of the photovoltachromic device is obtained under bleaching conditions, this transparency largely depending on the transversal size of the catalytic strips 76 and of the first portion strips 87.

According to yet a different embodiment, shown in Figure 6, the photoelectrode 86 is formed, as well as by the first portion strips 87, by a plurality of second portion strips 89, which are made of the same material of which the host layer 88 is made and are interdigitated with the first portion strips 87. In this case, the second portion strips 89 have the same width w as the electrochromic strips 74; more particularly, each second portion strip 89 is vertically aligned with a corresponding electrochromic strip 74.

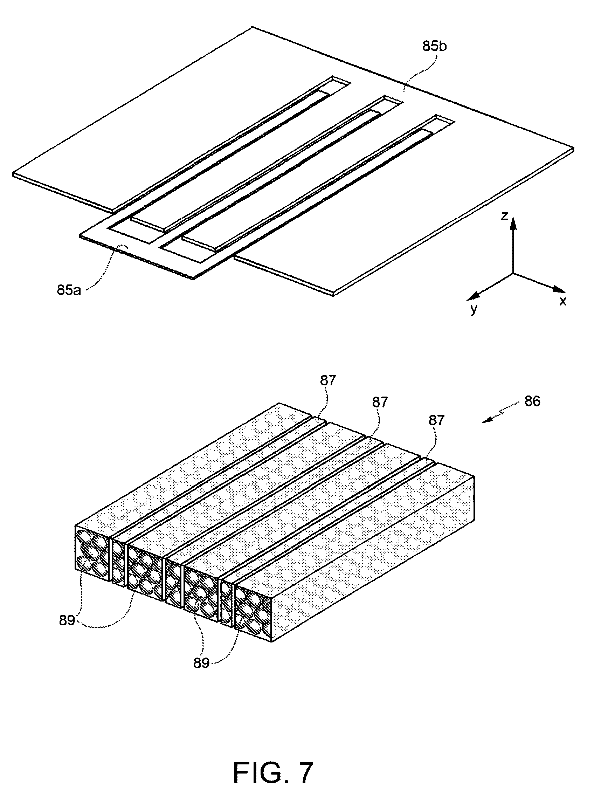

As shown in Figure 7, instead of the second conductive layer 24, a first and a second photoelectrode support region 85a and 85b are provided, which are interdigitated, are physically separate and are made of the same material as the second conductive layer 24.

The first portion strips 87 are in direct contact with the first photoelectrode support region 85a, which lies above them. The second portion strips 89 are in direct contact with the second photoelectrode support region 85b, which lies above them. In this way, the first portion strips 87 are electrically in contact with each other; similarly, the second portion strips 89 are electrically in contact with each other. Nevertheless, the first and second portion strips 87 and 89 are electrically decoupled from each other. Furthermore, the first and second photoelectrode support regions 85a and 85b are connected to the first and the second conductive path 37a and 39a, respectively. This embodiment enables optimizing the performance of the two circuits in a virtually independent manner, as the photovoltachromic device is equipped with four electrodes, with the only element shared by the two circuits being the electronic mediator. This embodiment therefore enables the rapid, effective and independent control of the two functions performed by the photovoltachromic device 50.

In the embodiment shown in Figure 7, the first and second portion strips 87 and 89 may be sensitized with different sensitizers. For example, the first portion strips 87 may be sensitized with the first sensitizer 90, while the second portion strips 89 may be sensitized with a second sensitizer 90bis, different from the first sensitizer 90. Furthermore, for practical purposes, the portion of the photoelectrode 86 that feeds the photovoltaic circuit is physically and electrically separate from the portion that feeds the photoelectrochromic circuit.

Operationally, the chemical-physical mechanisms that control the operation of the photovoltachromic device 50 are the same mechanisms described for the photovoltachromic device shown in Figure 1. Nevertheless, the colouring kinetics of the electrochromic strips 74 is rendered uniform and augmented by the geometric layout of the catalytic strips 76.

Purely by way of example, it is also possible that the first sensitizer 90 is such as to absorb solar radiation in a limited visible region (for example, between 420nm and 550nm). At the same time, the electrochromic material can be virtually transparent over all wavelengths of the visible spectrum when operating in the bleached configuration, i.e. when the second switch 39b is open; alternatively, the electrochromic material could absorb solar radiation in the red and near infrared region (for example, between 550nm and 900nm) when operating in the coloured configuration, i.e. when the second switch 39b is closed.

Still purely by way of example, it is also possible that the first sensitizer 90 absorbs light in the near infrared region (for example, between 700nm and 1100nm). At the same time, the electrochromic material can be transparent for all wavelengths in the visible spectrum when operating in the bleached configuration, i.e. when the second switch 39b is open; alternatively, the electrochromic material could absorb solar radiation in the visible region (for example, between 400nm and 700nm) when operating in the coloured configuration, i.e. when the second switch 39b is closed. In this way, a system capable of shielding solar radiation is obtained.

In general, the transmittance of the electrochromic region 74 can be modulated up to a maximum of approximately 90% of the measurable transmittance value in the bleached configuration. The photovoltachromic device 50 can also be used to produce a photovoltachromic module formed by a plurality of photovoltachromic devices, opportunely connected to an electric appliance (in series or in parallel), in order to obtain the supply of electrical power.

In the case of photovoltachromic modules used to power stand-alone appliances isolated from the supply grid, power storage is achieved by turning to an opportune accumulator, for example of the electrochemical type, of opportune capacity. It is possible to insert a control circuit between the photovoltachromic module and the accumulator that is able to make the photovoltachromic module work at the maximum power point.

Advantageously, the photovoltachromic device 50 can be produced via the following manufacturing process.

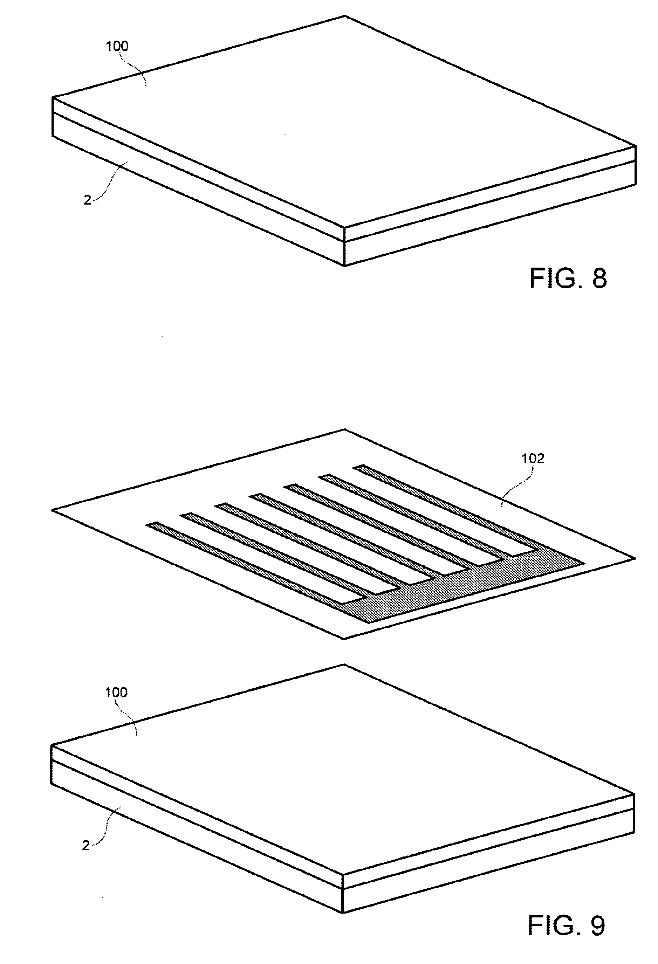

In detail, a (positive) resist layer 100 is arranged on top of the first sheet of glass 2 (Figure 8). Then (Figure 9), a lithographic mask 102 is arranged on top of the resist layer 100, and a first exposure to ultraviolet radiation is performed.

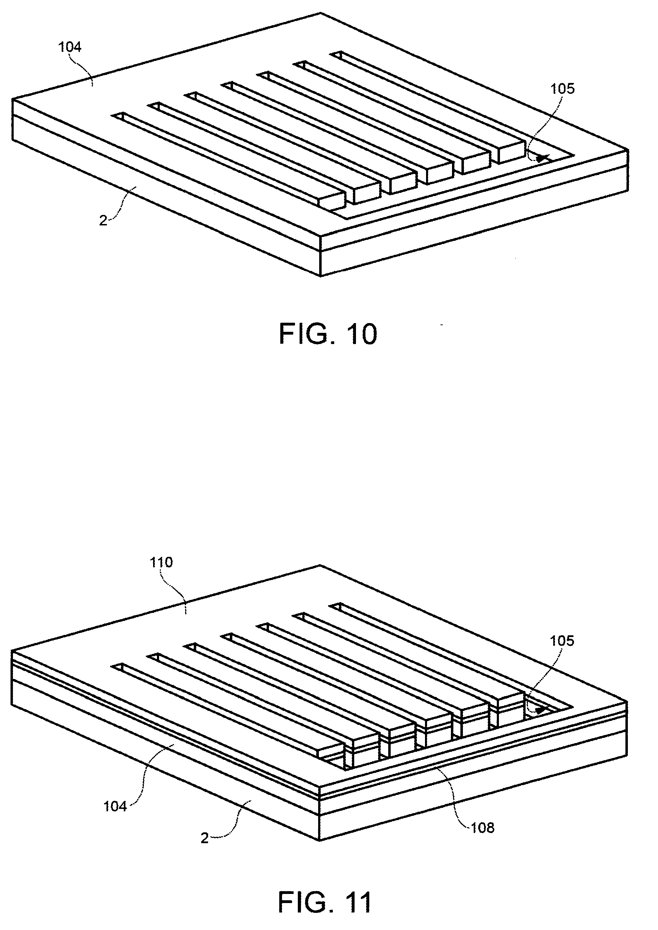

Following this (Figure 10), an organic solvent is applied, in a way to selectively remove the portions of the resist layer 100 not previously exposed to the ultraviolet radiation; the portions of the resist layer 100 that are not removed thus form a resist mask 104, which defines a shaped cavity 105.

Then (Figure 11), without removing the resist mask 104, the adhesion promoter layer 55 (not visible in Figure 11) is formed inside the shaped cavity 105, by evaporation. During this evaporation process, a first region to be removed 108 forms the above resist mask 104. Afterwards, without removing the resist mask 104, the catalytic region 72 (not visible in Figure 11) is formed inside the shaped cavity 105, by means of an evaporation process of the catalytic material. During this evaporation process, a second region to be removed 110 forms above the first region to be removed 108.

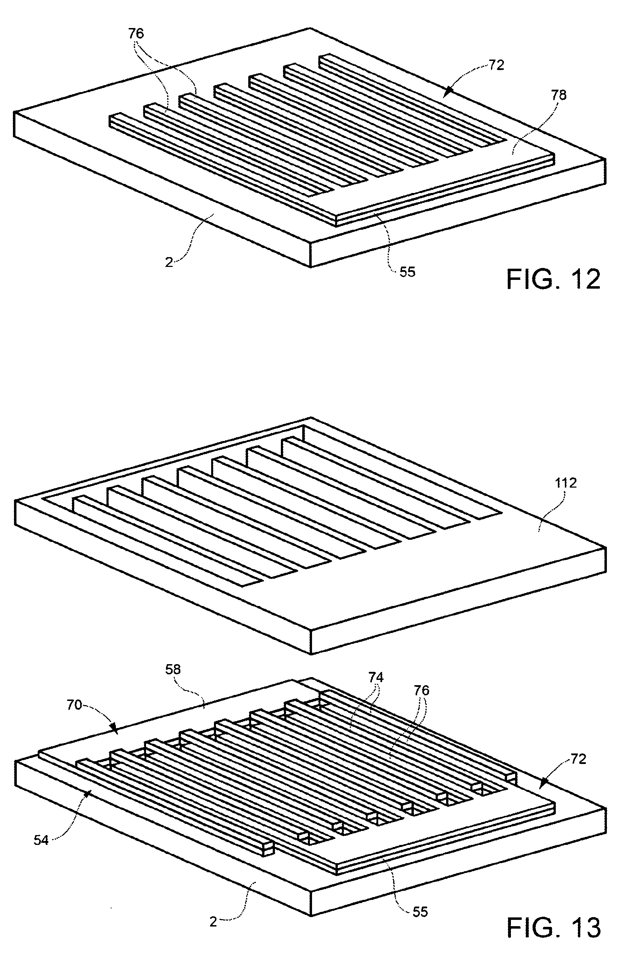

The resist mask 104 is then removed (Figure 12), by using a chemical solvent, such as acetone for example; together with the resist mask 104, the first and second portions to be removed 108 and 110 are also removed.

Afterwards (Figure 13), a physical type of mask 112 is prepared, made, for example, of metal (steel for example), which will hereinafter be referred to as the metallic mask 112. For example, the metallic mask 112 may have a thickness of approximately 150µm and may be formed by means of a laser-cutting operation.

The first conductive layer 54 is then formed by evaporation; afterwards, without removing the metallic mask 112 and after shielding the first contact portion 58, the electrochromic region 70 is formed. In particular, the metallic mask 112 is such that the first conductive layer 54 and the electrochromic region 70 are physically separated by the adhesion promoter layer 55 and the catalytic region 72.

In a manner in itself known, the metallic mask 112 is then removed and manufacturing of the photovoltachromic device 50 is completed.

The advantages that can be achieved with the present photovoltachromic device clearly emerge from the foregoing description.

In particular, the present photovoltachromic device is characterized by variations in transmittance that take place in a uniform manner within the electrochromic region, without the typical opacity of the catalytic material significantly impacting the overall aspect of the present photovoltachromic device. This is due precisely to the interdigitation of the catalytic region and the electrochromic region, which also enables increasing effectiveness in terms of colouring kinetics.

The use of a photoelectrode of the so-called full-area type, which is not claimed, also enables increasing the size of the portion of the photovoltachromic device assigned to electron generation.

In addition, the fact that fourth strips (89) of the photoelectrode, and therefore also the sensitizer, may be arranged above the electrochromic region provides a further degree of freedom for determining the aesthetical-functional characteristics of the present photovoltachromic device. In fact, it is possible, for example, to select a sensitizer depending on a first desired colouring, related to a state where the second conductive connection is interrupted. The colouring induced by the sensitizer thus represents a kind of polarization value of the colouring of the photovoltachromic device, which is then superimposed with a kind of variable component, which is instead a function of the electrochromic material chosen to form the electrochromic region, as well as of the irradiation.

Finally, it is clear that modifications and variants can be made to the photovoltachromic device and related manufacturing process without departing from the scope of the present invention, as defined in the appended claims.

For example, the catalytic strips and the electrochromic strips may have different shapes; furthermore, instead of resting on the adhesion promoter layer, the catalytic strips may rest on corresponding first support strips, or may rest directly on the first sheet of glass.

## Claims

1. A photovoltachromic device (50) comprising a photoelectrode (86) and a counterelectrode (66), said counterelectrode comprising an electrochromic region (70) and a catalytic region (72) that are physically separate;
**characterized in that** said catalytic region (72) comprises a plurality of first strips (76) and said electrochromic region (70) comprises a plurality of second strips (74) and said electrochromic region and said catalytic region are interdigitated; and wherein said photoelectrode (86) is arranged above said catalytic region (72); and wherein said photoelectrode (86) comprises a plurality, of third strips (87), each third strip being arranged opposite a corresponding first strip (76).

2. The device according to claim 1, wherein said first strips (76) have a first width (c), measured in a first direction (x), said second strips (74) having a second width (w), measured in said first direction, the ratio between said first and second widths being between 0.1 and 1.

3. The device according to claim 1 or 2, wherein said photoelectrode (6) further comprises a plurality of fourth strips (89), each fourth strip being arranged above a corresponding second strip (74).

4. The device according to claim 3, wherein said third strips (87) are sensitized with a first sensitizer (90) and said fourth strips (89) are sensitized with a second sensitizer (90bis) different from said first sensitizer.

5. The device according to claim 3 or 4, wherein said fourth strips (89) are electrically decoupled from said third strips (87), and further comprising:
- a first electrical connection (36) designed to connect said third strips (87) to said catalytic region (72); and
- a second electrical connection (38) designed to connect said fourth strips (89) to said electrochromic region (70);
said first and second electrical connections respectively comprising a first and a second electronic switch (37b and 39b) which can be independently controlled.

6. The device according to any of the preceding claims, further comprising an electronic mediator (94), which is an electrolyte in direct contact with said photoelectrode (86) and said counterelectrode (66) and contains a redox couple formed of:
- a halogen, or a compound alternatively based on sulphur, ferrocene or cobalt; and
- a binary compound containing an alkaline or alkaline-earth metal.

7. The photovoltachromic device according to any of the preceding claims, wherein said electrochromic region (70) is made of a cathodic-colouring electrochromic material.

## Patentansprüche

1. Fotovoltachrome Vorrichtung (50), die eine Fotoelektrode (86) und eine Gegenelektrode (66) aufweist, wobei die Gegenelektrode einen elektrochromen Bereich (70) und einen katalytischen Bereich (72) aufweist, die physikalisch getrennt sind;
**dadurch gekennzeichnet, dass** der katalytische Bereich (72) mehrere erste Streifen (76) aufweist und der elektrolytische Bereich (70) mehrere zweite Streifen (74) aufweist, und der elektrochrome Bereich und der katalytische Bereich ineinander verflochten sind; und wobei die Fotoelektrode (86) oberhalb des katalytischen Bereichs (72) angeordnet ist; und wobei die Fotoelektrode (86) mehrere dritte Streifen (87) aufweist, wobei jeder dritte Streifen entgegengesetzt zu einem entsprechenden ersten Streifen (76) angeordnet ist.

2. Vorrichtung nach Anspruch 1, wobei die ersten Streifen (76) eine erste Breite (c) haben, die in einer ersten Richtung (x) gemessen wird, die zweiten Steifen (74) eine zweite Breite (w) haben, die in der ersten Richtung gemessen wird, wobei das Verhältnis zwischen den ersten und zweiten Breiten zwischen 0,1 und 1 ist.

3. Vorrichtung nach Anspruch 1 oder 2, wobei die Fotoelektrode (6) ferner mehrere vierte Streifen (89) aufweist, wobei jeder vierte Streifen oberhalb eines entsprechenden zweiten Streifens (74) angeordnet ist.

4. Vorrichtung nach Anspruch 3, wobei die dritten Streifen (87) mit einem ersten Sensibilisator (90) sensibilisiert sind, und die vierten Streifen (89) mit einem zweiten Sensibilisator (90bis), der sich von dem ersten Sensibilisator unterscheidet, sensibilisiert sind.

5. Vorrichtung nach Anspruch 3 oder 4, wobei die vierten Streifen (89) elektrisch von den dritten Streifen (87) entkoppelt sind und ferner aufweisen:
- einen ersten elektrischen Anschluss (36), der konstruiert ist, um die dritten Streifen (87) mit dem katalytischen Bereich (72) zu verbinden; und
- einen zweiten elektrischen Anschluss (38), der konstruiert ist, um die vierten Streifen (89) mit dem elektrochromen Bereich (70) zu verbinden;
wobei die ersten und zweiten elektrischen Anschlüsse jeweils einen ersten und einen zweiten elektronischen Schalter (37b und 39b) aufweisen, die unabhängig gesteuert werden können.

6. Vorrichtung nach einem der vorhergehenden Ansprüche, die ferner einen elektronischen Vermittler (94) aufweist, der ein Elektrolyt in direktem Kontakt mit der Fotoelektrode (86) und der Gegenelektrode (66) ist und ein Redoxpaar enthält, das ausgebildet ist aus:
- einem Halogen oder einer Verbindung, die alternativ auf Schwefel, Ferrocen oder Kobalt basiert; und
- eine binäre Verbindung, die ein Alkali- oder ein Alkalierdmetall enthält.

7. Fotovoltachrome Vorrichtung nach einem der vorhergehenden Ansprüche, wobei der elektrochrome Bereich (70) aus einem kathodisch färbenden elektrochromen Material hergestellt ist.

## Revendications

1. Dispositif photovoltachromique (50) comprenant une photoélectrode (86) et une contre-électrode (66), ladite contre-électrode comprenant une région électrochromique (70) et une région catalytique (72) qui sont séparées physiquement ;
**caractérisé en ce que** ladite région catalytique (72) comprend une pluralité de premières bandes (76) et **en ce que** ladite région électrochromique (70) comprend une pluralité de deuxièmes bandes (74) et ladite région électrochromique et ladite région catalytique sont interdigitées ; et dans lequel ladite photoélectrode (86) est agencée au-dessus de ladite région catalytique (72) ; et dans lequel ladite photoélectrode (86) comprend une pluralité de troisièmes bandes (87), chaque troisième bande étant agencée opposée à une première bande (76) correspondante.

2. Dispositif selon la revendication 1, dans lequel lesdites premières bandes (76) ont une première largeur (c), mesurée dans une première direction (x), lesdites deuxièmes bandes (74) ayant une seconde largeur (w), mesurée dans ladite première direction, le rapport entre lesdites première et seconde largeurs étant compris entre 0,1 et 1.

3. Dispositif selon la revendication 1 ou 2, dans lequel ladite photoélectrode (6) comprend en outre une pluralité de quatrièmes bandes (89), chaque quatrième bande étant agencée au-dessus d'une deuxième bande (74) correspondante.

4. Dispositif selon la revendication 3, dans lequel lesdites troisièmes bandes (87) sont sensibilisées avec un premier sensibilisateur (90) et lesdites quatrièmes bandes (89) sont sensibilisées avec un second sensibilisateur (90bis) différent dudit premier sensibilisateur.

5. Dispositif selon la revendication 3 ou 4, dans lequel lesdites quatrièmes bandes (89) sont découplées électriquement desdites troisièmes bandes (87), et comprenant en outre .
- un premier raccordement électrique (36) conçu pour raccorder lesdites troisièmes bandes (87) à ladite région catalytique (72) ; et
- un second raccordement électrique (38) conçu pour raccorder lesdites quatrièmes bandes (89) à ladite région électrochromique (70) ;
lesdits premier et second raccordements électriques comprenant respectivement un premier et un second commutateur électronique (37b et 39b) qui peuvent être commandés indépendamment.

6. Dispositif selon l'une quelconque des revendications précédentes, comprenant en outre un médiateur électronique (94), qui est un électrolyte en contact direct avec ladite photoélectrode (86) et ladite contre-électrode (66) et contient un couple redox composé .
- d'un halogène, ou d'un composé à base en variante de soufre, de ferrocène ou de cobalt ; et
- d'un composé binaire contenant un métal alcalin ou alcalino-terreux.

7. Dispositif photovoltachromique selon l'une quelconque des revendications précédentes, dans lequel ladite région électrochromique (70) est constituée d'un matériau électrochromique de coloration cathodique.
